# FASCICULE DE BREVET EUROPEEN

(11) **EP 0 544 560 B1**
(45) Date de publication et mention de la délivrance du brevet: **25.01.1995**
(21) Numéro de dépôt: 92403089.3
(22) Date de dépôt: 17.11.1992
(51) Int. Cl.: B64C 25/22, B64C 25/26, F15B 13/02, F15B 15/22

(54) **Système d'actionnement du vérin de manoeuvre d'un train d'atterrissage d'avion**
System zur Betätigung eines Bedienungszylinders für das Fahrwerk eines Flugzeuges
Operating system for the actuating cylinder of an aircraft landing gear

(30) Priorité: 26.11.1991 FR 9114574
(43) Date de publication de la demande: 02.06.1993
(73) Titulaire: MESSIER BUGATTI, F-78140 Velizy Villacoublay (FR)
(72) Inventeur: Vaslin, Jean-Philippe, F-78180 Montigny-le-Bretonneux (FR)
(74) Mandataire: Jaunez, Xavier

(56) Documents cités:
- GB-A- 647 211
- US-A- 2 657 533
- US-A- 3 082 746
- US-A- 3 470 792

## Description

L'invention concerne l'actionnement des vérins de manoeuvre des trains d'atterrissage d'avions, et plus particulièrement les systèmes d'actionnement du type comportant une génération hydraulique capable d'envoyer du fluide sous pression vers la chambre annulaire du vérin de manoeuvre pour le relevage du train ou vers la chambre de pleine section dudit vérin pour la descente du train.

Les systèmes d'actionnement connus comportent en général des organes d'amortissement qui interviennent lorsque le piston arrive dans une zone de fin de course, et ce aussi bien pour la fin du relevage que pour la fin de la descente du train d'atterrissage. Les vérins comportent aussi des amortissements de fin de course avec des clapets de contrôle des pressions.

Cependant, la tige du vérin peut être soumise, dans certaines situations, à des contraintes élevées. Il en est par exemple ainsi en fin de relevage où l'inertie du train, ainsi que l'augmentation de pression obtenue dans la chambre d'amortissement fin de course, et l'effort moteur dans la chambre annulaire génèrent des efforts de compression importants sur la tige du vérin. Ces efforts sont pris en compte pour le dimensionnement du vérin. D'autre part, pour ce qui est de la descente du train, on cherche à mettre en oeuvre une séquence comportant successivement une mise en pression de la chambre annulaire, un déverrouillage du boîtier d'accrochage, et une mise en pression de la chambre de pleine section, en évitant les pointes de pression dans la chambre annulaire.

Le problème que l'invention se propose de résoudre est de concevoir un système d'actionnement capable d'éviter que la tige du vérin soit soumise à des contraintes dangereuses, notamment en fin de relevage du train d'atterrissage.

L'invention a également pour objet de réaliser un système d'actionnement dont la structure soit à la fois simple et extrêmement fiable, et qui puisse être aisément adjoint aux installations existantes.

L'invention a aussi pour objet de concevoir un système d'actionnement qui permette d'éviter les pointes de pression dans la chambre annulaire du vérin, lors de la descente du train d'atterrissage, et par suite d'obtenir un gain sur le dimensionnement de l'enveloppe du vérin, et qui autorise encore une descente secours du train d'atterrissage en cas de défaillance de la génération hydraulique.

Il s'agit plus particulièrement d'un système d'actionnement du vérin de manoeuvre d'un train d'atterrissage d'avion, comportant une génération hydraulique capable d'envoyer du fluide sous pression vers la chambre annulaire du vérin de manoeuvre pour le relevage du train, ou vers la chambre de pleine section dudit vérin pour la descente du train, caractérisé en ce qu'il comporte un dispositif de sécurité visant à éviter une surcharge de la tige du vérin de manoeuvre sous l'effet de pointes de pression, ledit dispositif comprenant deux clapets de surpression, dont un premier clapet de surpression limitant la pression délivrée dans la chambre annulaire et étant en outre piloté par la pression régnant dans la chambre de pleine section pour faire chuter la pression régnant dans ladite chambre annulaire, et un second clapet de surpression, du type différentiel, contrôlant en permanence l'écart de pression existant entre les deux chambres du vérin.

De préférence, les deux clapets de surpression sont intégrés dans un circuit comportant des premiers moyens d'amortissement de fin de course associés à la chambre de pleine section, afin de contrôler, en fin de relevage du train, à la fois le ralentissement de la tige et la chute de pression dans la partie terminale de ladite chambre associée auxdits moyens d'amortissement. En particulier, les premiers moyens d'amortissement comportent un diaphragme et un clapet anti-retour, et servent à contrôler la vitesse de fin de course de la tige après ralentissement de celle-ci.

Avantageusement encore, le circuit précité comporte également des seconds moyens d'amortissement de fin de course associés à la chambre annulaire, afin de contrôler , en fin de descente du train, à la fois le ralentissement de la tige et la chute de pression dans la partie terminale de ladite chambre associée auxdits moyens d'amortissement. En particulier, les seconds moyens d'amortissement comportent un diaphragme et un clapet anti-retour, et servent à contrôler la vitesse de fin de course de la tige après ralentissement de celle-ci.

Il est en outre intéressant qu'un troisième clapet de surpression soit associé aux seconds moyens d'amortissement, afin de limiter la pression régnant dans la partie terminale de la chambre annulaire lois de la descente du train d'atterrissage.

De préférence encore, le système d'actionnement comporte en outre un électro-distributeur associé à la génération hydraulique, de façon à permettre d'une part un démarrage de ladite génération hydraulique sous une faible charge, ledit électro-distributeur étant alors excité pour l'envoi de fluide sous pression vers l'une ou l'autre des chambres du vérin, et d'autre part une descente secours du train en cas de défaillance de la génération hydraulique, ledit électro-distributeur étant alors au repos. Avantageusement alors, la ligne associée à la descente secours, pour diriger le fluide de la chambre annulaire vers l'électro-distributeur au repos, comporte un clapet anti-retour, ainsi qu'un diaphragme pour contrôler la vitesse de descente du train.

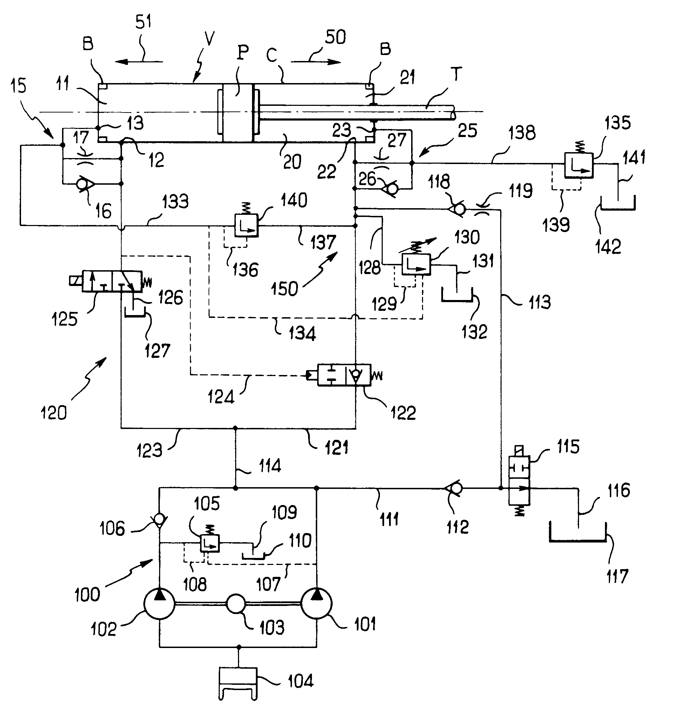

D'autres caractéristiques et avantages de l'invention apparaîtront plus clairement à la lumière de la description qui va suivre et du dessin annexé, concernant un mode de réalisation particulier, en référence à la figure unique dudit dessin qui illustre schématiquement la structure et l'agencement d'un système d'actionnement conforme à l'invention.

La figure unique permet de distinguer un vérin de manoeuvre V d'un train d'atterrissage d'avion, dont la tige est référencée T et le piston P. Le train d'atterrissage relié à la tige T n'a pas été représenté ici, mais l'on a figuré une flèche 50 symbolisant le sens de la descente du train d'atterrissage, et une flèche 51 symbolisant le sens de relevage dudit train. La chambre du vérin V entourant la tige T est référencée 20, et cette chambre, ci-après dénommée chambre annulaire, est celle vers laquelle du fluide sous pression est envoyé pour procéder au relevage du train, l'autre chambre, référencée 10, et dénommée chambre de pleine section, recevant du fluide sous pression pour la descente du train d'atterrissage. Le cylindre C du vérin de manoeuvre V comporte, de façon tout-à-fait classique, des orifices de passage 12 et 22 dans les chambres 10 et 20, ainsi que des orifices plus petits, en fonds de cylindre, référencés 13 et 23, ces derniers orifices étant concernés lorsque le piston P arrive en fin de course dans l'une ou l'autre des deux chambres du vérin. La partie terminale de la chambre de pleine section 10, référencée 11, et la partie terminale de la chambre annulaire 20, référencée 21, constituent ainsi les chambres d'amortissement du vérin. On distingue enfin des butées B associées au piston P du vérin de manoeuvre.

Le système d'actionnement du vérin de manoeuvre comporte une génération hydraulique 100 capable d'envoyer du fluide sous pression vers la chambre annulaire 20 du vérin de manoeuvre V pour le relevage du train, ou vers la chambre de pleine section 10 dudit vérin pour la descente du train. La génération hydraulique 100 illustrée sur la figure comporte ici un étage basse pression et un étage haute pression, lesdits étages étant reliés par un clapet conjoncteur-disjoncteur permettant de court-circuiter l'étage basse pression lorsque la charge qui est en aval de la génération hydraulique dépasse un seuil prédéterminé.

Un tel type de génération hydraulique est déjà connu, de sorte que l'on décrira succinctement ses organes constitutifs.

La génération hydraulique 100 comporte ainsi une pompe haute pression 101 et une pompe basse pression 102, toutes deux entraînées par un moteur électrique 103, et reliées à une réserve pressurisée de fluide hydraulique 104. En sortie de la pompe basse pression 102, on trouve le clapet conjoncteur-disjoncteur hydraulique 105 avec sa boucle d'amortissement 108, dont la ligne de pilotage est schématisée par la ligne en pointillés 107, et dont la sortie 109 mène à un réservoir de fluide 110. La ligne pointillée 107 rappelle que le clapet conjoncteur-disjoncteur hydraulique 105 est piloté par la pression du fluide hydraulique en sortie de la pompe haute pression 101. Un clapet anti-retour 106 boucle enfin de circuit. Une telle génération hydraulique fonctionne avec les deux étages dans des conditions normales, ou avec le seul étage haute pression dans des conditions plus sévères. A titre indicatif, on pourra prévoir une pompe haute pression pouvant débiter jusqu'à 350 x 10⁵ Pa, et une pompe basse pression pouvant débiter jusqu'à 215 x 10⁵ Pa. Ainsi, lors du relevage du train d'atterrissage, une pression de 215 x 10⁵ Pa est en générale suffisante pour relever l'atterrisseur dans un temps de l'ordre d'une dizaine de secondes, de sorte que la génération fonctionne alors avec ses deux étages de pression, la pompe haute pression ne débitant qu'à 215 x 10⁵ Pa. Si les conditions de relevage deviennent plus sévères, l'étage haute pression fournit une pression supérieure à 215 x 10⁵ Pa qui enclenche le pilotage du clapet conjoncteur-disjoncteur hydraulique 105 et qui renvoit alors le débit de l'étage basse pression à la réserve de fluide 110. L'étage haute pression peut alors délivrer une pression allant jusqu'à 350 x 10⁵ Pa pour manoeuvrer l'atterrisseur dans des cas de relevage particulièrement difficiles, le débit de l'étage haute pression permettant alors d'effectuer le relevage du train dans un temps qui est de l'ordre d'une vingtaine de secondes.

Conformément à un aspect essentiel de l'invention, le système d'actionnement comporte un dispositif de sécurité 150 visant à éviter une surcharge de la tige T du vérin de manoeuvre V sous l'effet de pointes de pression, ledit dispositif comprenant deux clapets de surpression 130 et 140 qui sont agencés de telle façon que le premier clapet de surpression 130 limite la pression délivrée dans la chambre annulaire 20, et soit en outre piloté par la pression régnant dans la chambre de pleine section 10 pour faire chuter la pression régnant dans ladite chambre annulaire, et que le second clapet de surpression 140, du type différentiel, contrôle en permanence l'écart de pression existant entre les deux chambres 10 et 20 du vérin V.

La fonction de chacun des deux clapets de surpression précités 130 et 140 sera mieux comprise lorsque l'on en viendra à décrire le principe de fonctionnement du système d'actionnement conforme à l'invention, tant lors du relevage du train que lors de la descente dudit train. On va décrire préalablement les différents organes constitutifs du circuit 120 dans lequel est intégré le dispositif de sécurité 150 précité, l'agencement de ce circuit n'étant donné qu'à titre illustratif.

Le circuit 120 est raccordé par une ligne 114 à la génération hydraulique 100, ligne à partir de laquelle on trouve une première branche 121 menant à la chambre annulaire 20 du vérin, en passant par une vanne pilotée 122, et une deuxième branche 123 menant à la chambre de pleine section 10 dudit vérin, en passant par un électro-distributeur 125. La vanne 122 est ici illustrée en position de repos, qui correspond à un sens passant permettant au fluide hydraulique d'aller vers la chambre annulaire 20. Cette position correspond au relevage du train d'atterrissage. L'électro-distributeur 125 est, dans cette situation, à l'état non excité, dans lequel il peut renvoyer le fluide hydraulique provenant de la chambre de pleine section 10 dans une réserve de fluide 127, par l'intermédiaire de la ligne 126. Par contre, lorsque l'électro-distributeur 125 est excité, le fluide hydraulique peut passer par la branche 123 pour aller vers la chambre de pleine section 10, et le pilotage de la vanne 122, pilotage qui est schématisé par la ligne pointillée 124, excite ladite vanne pour l'amener en position non passante. Cette deuxième situation de l'électro-distributeur 125 et de la vanne pilotée 122 correspond à la descente du train d'atterrissage.

L'intégration des deux clapets de surpression 130 et 140 au circuit précité 120 s'organise comme indiqué ci-après.

Le premier clapet de surpression 130 est raccordé par une ligne 128 à la branche 121 précitée, ledit clapet débitant, lorsqu'il est ouvert, par une ligne 131, dans une réserve de fluide 132. Le clapet de surpression 130 peut ainsi agir comme limiteur de pression, en l'absence de tout pilotage, en limitant la pression délivrée par la génération hydraulique 100 dans la chambre annulaire 20 du vérin. Le tarage correspondant pourra par exemple être fixé à une valeur de l'ordre de 350 x 10⁵ Pa. Cette première fonction est schématisée par la ligne pointillée 129. Le clapet de surpression 130 est en outre piloté, comme cela est schématisé par la ligne pointillée 134, par la pression régnant dans la chambre de pleine section 10, via l'orifice 13 du cylindre du vérin et la ligne correspondante référencée 133 menant au second clapet de surpression 140. Ce pilotage du premier clapet de surpression 130 intervient lors du relevage du train, lorsque le piston est proche de la fin de course correspondante (c'est-à-dire lorsque l'orifice 12 est masqué, la chambre de pleine section se réduisant alors à sa partie terminale ou chambre d'amortissement 11). Dans ce cas, lorsque la pression dans la chambre d'amortissement 11 atteint un seuil prédéterminé (ce seuil étant notablement inférieur à 350 x 10⁵ Pa, de façon que le détarage intervienne rapidement), ladite pression a pour effet de détarer le clapet de surpression 130, ce qui fait chuter la pression régnant dans la chambre annulaire 20 du vérin de manoeuvre. Une situation analogue avec pilotage se retrouve pour ce premier clapet de surpression 130 lors de la descente du train, du fait de l'augmentation de la pression dans la chambre de pleine section 10, via la ligne de pilotage 134. Dans cette dernière situation, le premier clapet de surpression 130 est alors détaré, ce qui fait communiquer la chambre annulaire 20 du vérin avec la réserve de fluide associée 132.

Le second clapet de surpression 140 reçoit d'un côté la pression venant de la ligne 133 qui est associée à la chambre de pleine section du vérin, et de l'autre côté la pression venant d'une ligne 137 qui se raccorde à la branche 121 menant à la chambre annulaire 20 dudit vérin. Une boucle d'amortissement 136 est associée de façon classique au second clapet de surpression 140, pour adoucir le retour en position fermée.

Contrairement au premier clapet de surpression 130, le second clapet de surpression 140 est du type différentiel, c'est-à-dire qu'il laisse automatiquement passer le fluide dès qu'un écart de pression prédéterminé de part et d'autre dudit clapet est atteint. Ce second clapet de surpression 140 permet ainsi de contrôler en permanence l'écart de pression existant entre les deux chambres 10 et 20 du vérin V, et, du fait de son raccordement à la branche 121 du circuit, il débite vers la réserve de fluide 132 via le premier clapet de surpression 130. Un tel contrôle de l'écart de pression entre les deux chambres du vérin est particuliièrement intéressant lors du relevage du train d'atterrissage, en situation de fin de course, mais aussi à la descente du train d'atterrissage, lors de la montée en pression dans la chambre de pleine section.

Il est par ailleurs avantageux que le circuit 120 dans lequel les deux clapets de surpression 130 et 140 sont intégrés comportent des moyens d'amortissement de fin de course 15, associés à la chambre de pleine section 10, afin de contrôler, en fin de relevage du train, à la fois le ralentissement de la tige T du vérin de manoeuvre et la chute de pression dans la partie terminale 11 de la chambre de pleine section 10 associée auxdits moyens d'amortissement. Conformément à une technologie traditionnelle, ces moyens d'amortissement 15 comportent un diaphragme 17, qui permet un contrôle de la vitesse de fin de course de la tige T après ralentissement de celle-ci, et un clapet anti-retour 16 qui permet d'alimenter la chambre d'amortissement de fin de course, sans passer par le diaphragme précité.

De façon analogue, le circuit 120 comporte également des seconds moyens d'amortissement 25 de fin de course associés à la chambre annulaire 20, afin de contrôler, en fin de descente du train, à la fois le ralentissement de la tige T et la chute de pression dans la partie terminale 21 de cette chambre annulaire qui est associée auxdits moyens d'amortissement. Ces seconds moyens d'amortissement 25 comportent ici, comme les premiers moyens d'amortissement 15, un diaphragme 27 et un clapet anti-retour 26, de façon à contrôler la vitesse de fin de course de la tige T après un ralentissement de celle-ci.

Pour la descente du train, il est par ailleurs avantageux de prévoir un troisième clapet de surpression 135, associé aux seconds moyens d'amortissement 25, afin de limiter la pression régnant dans la partie terminale 21 de la chambre annulaire 20. Ainsi que cela est illustré sur la figure, ce dernier clapet de surpression 135 est raccordé au circuit des moyens d'amortissement 25 par une branche 138, le pilotage dudit clapet étant schématisé par la ligne pointillée 139, et la sortie dudit clapet se fait vers une réserve de fluide hydraulique 142, par une ligne de sortie 141.

Les différentes réserves précitées (réserves 110, 119, 127, 132 et 142) seront dans la pratique confondues avec la réserve pressurisée 104 qui constitue alors une réserve commune de fluide hydraulique.

Il est par ailleurs intéressant que le système d'actionnement comporte en outre un électro-distributeur 115 associé à la génération hydraulique 100, de façon à permettre un démarrage de cette génération hydraulique sous une faible charge. L'électro-distributeur 115 illustré ici est raccordé à la génération hydraulique 100 par une ligne 111, via un clapet anti-retour 112, et la sortie dudit électro-distributeur va à un réservoir de fluide hydraulique 117, via une ligne 116. L'électro-distributeur 115 est ouvert au repos (ce sens passant correspond à celui illustré sur la figure) et il est fermé lorsque l'opérateur actionne une commande électrique ou électronique associée. On notera également la présence d'une ligne de raccordement 113 comportant un diaphragme 119 et un clapet anti-retour 118, cette ligne étant seulement concernée dans le cas d'une situation d'ultime secours au cours de laquelle on souhaite descendre le train malgré une défaillance de la génération hydraulique 100. Cette ligne 113 est associée à la descente secours, pour diriger le fluide de la chambre annulaire 20 vers l'électro-distributeur 115 alors au repos, le diaphragme 119 permettant de contrôler la vitesse de descente du train. Ainsi, l'électro-distributeur 115 permet d'une part un démarrage de la génération hydraulique 100 sous une faible charge, ledit électro-distributeur étant alors excité pour l'envoi de fluide sous pression vers l'une ou l'autre des chambres 10 et 20 du vérin, et d'autre part une descente secours du train en cas de défaillance de la génération hydraulique 100, ledit électro-distributeur étant alors au repos, et les premier et second clapets de surpression 130 et 140 étant naturellement fermés.

On va maintenant décrire les différentes étapes de fonctionnement du système d'actionnement précité, d'abord lors du relevage du train d'atterrissage.

Lorsque le pilote désire relever le ou les atterrisseurs, il met l'électro-pompe en route, l'électro-distributeur 115 restant quant à lui en position ouverte de repos pour permettre un démarrage du moteur électrique sous une charge réduite. Le pilote actionne ensuite la commande de l'électro-distributeur 115, ce qui permet au débit de la génération de pompage 100 d'alimenter la chambre annulaire 20 du vérin, en passant par la ligne 114 et la branche 121 (en traversant la vanne 122 qui est dans son sens passant).

Ainsi que cela a été dit plus haut, la génération hydraulique 100 fonctionne sur ses deux étages basse pression et haute pression tant que le relevage s'effectue dans des conditions normales, les débits des deux étages s'additionnant alors, ou sur le seul étage haute pression qui fournit alors une pression supérieure à l'étage basse pression en cas de conditions difficiles. La pression délivrée dans la chambre annulaire 20 croît progressivement, en étant limitée, par exemple à 350 x 10⁵ Pa, par le clapet de surpression 130, une pression supérieure ayant pour effet d'ouvrir ledit clapet, et de diriger le fluide vers la réserve associée 132. Dans cette situation, l'électro-distributeur 125 est au repos, ce qui permet de diriger le fluide de la chambre de pleine section 10 vers le réservoir de fluide 127. Lorsque le piston arrive en position d'amortissement fin de course (train haut), c'est-à-dire que l'orifice 12 est masqué, la pression dans la chambre d'amortissement 11 commence à croître. Dès que cette pression atteint la valeur de seuil correspondante, le premier clapet de surpression 130 est alors automatiquement détaré par le pilotage associé (ligne 134), ce qui fait chuter la pression dans la chambre annulaire 20, et d'autre part l'écart de pression entre la chambre d'amortissement 11 et la chambre annulaire 20 est en permanence contrôlé par le second clapet de surpression 140, qui est différentiel, remplissant sa fonction de limiteur de pression. On obtient ainsi un ralentissement de la tige du vérin, et simultanément une chute de pression dans la chambre d'amortissement 11. On est alors assuré que la tige du vérin n'est pas soumise, en fin de relevage, à des efforts de compression dangereux, malgré l'effet de l'inertie du train en cours de relevage. Tout risque de flambage de la tige du vérin est ainsi écarté avec une quasi certitude. Après ralentissement de la tige, la vitesse de fin de course de ladite tige est donnée par le réglage (effectué préalablement) du diaphragme 17 faisant partie des moyens d'amortissement 15. L'atterrisseur est alors automatiquement verrouillé dans sa position relevée par le boîtier d'accrochage associé, et la commande de l'électro-distributeur 115 peut être annulée, et la génération hydraulique 100 arrêtée.

On va maintenant décrire les différentes étapes associées à la descente du train d'atterrissage.

Pour la descente des atterrisseurs, le pilote commence par faire démarrer la génération hydraulique 100, laquelle génération fonctionnera la plupart du temps avec ses deux étages haute pression et basse pression, car le poids du train d'atterrissage constitue une charge motrice lors de la descente. Toutefois, en cas de point dur, et si la résistance due au point dur nécessite une pression plus élevée que 215 x 10⁵ Pa,l'étage basse pression est automatiquement court-circuité grâce au clapet conjoncteur-disjoncteur 105, la génération hydraulique ne fonctionnant alors qu'avec son étage haute pression, ainsi que cela a déjà été expliqué plus haut. Le pilote actionne alors la commande de l'électro-distributeur 115, et le fluide hydraulique commence par passer dans la branche 121 pour arriver dans la chambre annulaire 20 du vérin : sous l'effet de la pression régnant dans la chambre annulaire, la tige du vérin rentre à nouveau, après quoi le déverrouillage du boîtier d'accrochage est commandé. L'électro-distributeur 125 est ensuite excité, ce qui permet au fluide hydraulique de passer par la branche 123 pour arriver dans la chambre de pleine section 10. Une telle séquence, lors du déverrouillage, permet d'éviter les pointes de pression dans la chambre annulaire du vérin dans les premiers instants qui suivent le déverrouillage, et procure ainsi un gain sur le dimensionnement de l'enveloppe du vérin. La pression commence alors à monter dans la chambre de pleine section 10 du vérin et l'atterrisseur commence à descendre. La montée de la pression dans la chambre 10 provoque automatiquement, par la ligne de pilotage 124, l'actionnement de l'électro-distributeur 122 qui bascule en position de fermeture. Tout le débit de fluide passe donc par la branche 123 pour arriver dans la chambre de pleine section du vérin. Dès que le seuil de pression correspondant est atteint, la pression régnant dans la chambre de pleine section 10 du vérin vient également détarer le clapet de surpression 130 (ledit clapet fonctionnant alors en sécurité de mise au retour), du fait du pilotage symbolisé par la ligne 134. Le détarage ainsi réalisé permet alors de faire communiquer la chambre annulaire 20 du vérin avec la réserve de fluide 132.

Ainsi que cela a été dit plus haut, le poids de l'atterrisseur constitue alors une charge motrice, de sorte que le niveau de pression fourni par la génération de pompage reste relativement faible. En tout état de cause, la pression dans la chambre de pleine section reste en permanence soumise à un contrôle, grâce à la présence du second clapet de surpression 140 qui contrôle à tout moment l'écart de pression existant entre les deux chambres du vérin. Un tel contrôle permet d'éviter, en toute sécurité, que la tige du vérin soit soumise à une surcharge excessive. La vitesse de descente de l'atterrisseur est alors donnée par le débit de la génération de pompage 100. Une fois le train d'atterrissage arrivé en position basse, le mouvement de descente est freiné par les moyens d'amortissement 25. Dans le cadre de cet amortissement fin de course, la pression dans la chambre d'amortissement 21 augmente, mais est limitée par le troisième clapet de surpression 135. Après ralentissement de la tige, la vitesse de fin de course est finalement donnée par le réglage (effectué préalablement) du diaphragme associé 27. Le verrouillage en position basse de l'atterrisseur est automatiquement réalisé par une cinématique à alignement de contre-fiches. A ce moment, les commandes des électro-distributeurs 125 puis 115 peuvent être annulées, et la génération hydraulique 100 arrêtée.

En cas de défaillance du système normal, c'est-à-dire dans une situation de panne de la génération hydraulique 100 mais en l'absence de point dur, le système précité est compatible avec une descente en ultime secours. L'électro-distributeur 115 est dans ce cas en position de repos, dans son sens passant, de sorte que le fluide de la chambre annulaire 20 du vérin peut emprunter la ligne 113, en passant par le clapet anti-retour 118 et le diaphragme 119, pour arriver finalement à la réserve de fluide 117 via l'électro-distributeur 115. Le diaphragme 119 règle alors la vitesse de descente, et la fin de course de descente est, comme précédemment, réglée par le diaphragme 27. Une fois le train descendu, le verrouillage train bas est effectué comme précédemment, par la cinématique à alignement de contrefiches.

L'invention n'est pas limitée au mode de réalisation qui vient d'être décrit, mais englobe au contraire toute variante couverte par les revendications qui suivent.

## Revendications

1. Système d'actionnement du vérin de manoeuvre d'un train d'atterrissage d'avion, comportant une génération hydraulique (100) capable d'envoyer du fluide sous pression vers la chambre annulaire (20) du vérin de manoeuvre (V) pour le relevage du train, ou vers la chambre de pleine section (10) dudit vérin pour la descente du train, caractérisé en ce qu'il comporte un dispositif de sécurité (150) visant à éviter une surcharge de la tige (T) du vérin de manoeuvre (V) sous l'effet de pointes de pression, ledit dispositif comprenant deux clapets de surpression (130,140), dont un premier clapet de surpression (130) limitant la pression délivrée dans la chambre annulaire (20) et étant en outre piloté par la pression régnant dans la chambre de pleine section (10) pour faire chuter la pression régnant dans ladite chambre annulaire, et un second clapet de surpression (140), du type différentiel, contrôlant en permanence l'écart de pression existant entre les deux chambres (10, 20) du vérin (V).

2. Système d'actionnement selon la revendication 1, caractérisé en ce que les deux clapets de surpression (130, 140) sont intégrés dans un circuit (120) comportant des premiers moyens d'amortissement (15) de fin de course associés à la chambre de pleine section (10), afin de contrôler, en fin de relevage du train, à la fois le ralentissement de la tige (T) et la chute de pression dans la partie terminale (11) de ladite chambre associée auxdits moyens d'amortissement.

3. Système d'actionnement selon la revendication 2 caractérisé en ce que les premiers moyens d'amortissement (15) comportent un diaphragme (17) et un clapet anti-retour (16), et servent à contrôler la vitesse de fin de course de la tige (T) après ralentissement de celle-ci.

4. Système d'actionnement selon la revendication 2, caractérisé en ce que le circuit (120) comporte également des seconds moyens d'amortissement (25) de fin de course associés à la chambre annulaire (20), afin de contrôler , en fin de descente du train, à la fois le ralentissement de la tige (T) et la chute de pression dans la partie terminale (21) de ladite chambre associée auxdits moyens d'amortissement.

5. Système d'actionnement selon la revendication 4, caractérisé en ce que les seconds moyens d'amortissement (25) comportent un diaphragme (27) et un clapet anti-retour (26), et servent à contrôler la vitesse de fin de course de la tige (T) après ralentissement de celle-ci.

6. Système d'actionnement selon la revendication 4 ou la revendication 5, caractérisé en ce qu'un troisième clapet de surpression (135) est en outre associé aux seconds moyens d'amortissement (25), afin de limiter la pression régnant dans la partie terminale (21) de la chambre annulaire (20).

7. Système d'actionnement selon l'une des revendications 1 à 6, caractérisé en ce qu'il comporte en outre un électro-distributeur (115) associé à la génération hydraulique (100), de façon à permettre d'une part un démarrage de ladite génération hydraulique sous une faible charge, ledit électro-distributeur étant alors excité pour l'envoi de fluide sous pression vers l'une ou l'autre des chambres (10, 20) du vérin, et d'autre part une descente secours du train en cas de défaillance de la génération hydraulique (100), ledit électro-distributeur étant alors au repos.

8. Système d'actionnement selon la revendication 7, caractérisé en ce que la ligne (113) associée à la descente secours, pour diriger le fluide de la chambre annulaire (20) vers l'électro-distributeur (115) au repos, comporte un clapet anti-retour (118), ainsi qu'un diaphragme (119) pour contrôler la vitesse de descente du train.

## Claims

1. A system for powering the driving actuator of an aircraft undercarriage, the system comprising a hydraulic generator (100) capable of delivering fluid under pressure to the annular chamber (20) of the driving actuator (V) to lift the undercarriage, or to the full-section chamber (10) of said actuator to lower the undercarriage, the system being characterized in that it includes a safety device (150) for avoiding overloading the rod (T) of the driving actuator (V) under the effect of pressure peaks, said device comprising two pressure relief valves (130, 140), of which a first pressure relief valve (130) limits the pressure delivered to the annular chamber (20) and is also under the control of the pressure that exists in the full-section chamber (10) so as to cause the pressure in said annular chamber to drop, and of which a second pressure relief valve (140) is of the differential type and continuously controls the pressure difference between the two chambers (10, 20) of the actuator (V).

2. A power supply system according to claim 1, characterized in that the two pressure relief valves (130, 140) are included in a circuit (120) that further includes first end-of-stroke damping means (15) associated with the full-section chamber (10) so that at the end of raising the undercarriage it controls both the slowing down of the rod (T) and the pressure drop in the terminal portion (11) of said chamber associated with said damping means.

3. A power supply system according to claim 2, characterized in that the first damping means (15) include a restriction (17) and a non-return valve (16) and serve to control the end-of-stroke speed of the rod (T) after it has slowed down.

4. A power supply system according to claim 2, characterized in that the circuit (120) also includes second end-of-stroke damping means (25) associated with the annular chamber (20) for the purposes at the end of undercarriage lowering both of controlling the slowing down of the rod (T) and of controlling the pressure drop in the end portion (21) of said chamber associated with said damping means.

5. A power supply system according to claim 4, characterized in that the second damping means (25) include a restriction (27) and a non-return valve (26), and serve to control the end-of-stroke speed of the rod (T) after it has slowed down.

6. A power supply system according to claim 4 or claim 5, characterized in that a third pressure relief valve (135) is also associated with the second damping means (25) in order to limit the pressure existing in the end portion (21) of the annular chamber (20).

7. A power supply system according to any one of claims 1 to 6, characterized in that it further includes an electrically controlled directional control valve (115) associated with the hydraulic generator (100) firstly to enable said hydraulic generator to he started up under low load, with said electrically controlled valve then being excited so as to direct fluid under pressure to one or other of the chambers (10, 20) of the actuator, and secondly to enable the undercarriage to be lowered in an emergency in the event of the hydraulic generator (100) failing, said electrically controlled valve then being at rest.

8. A power supply system according to claim 7, characterized in that the line (113) associated with emergency lowering of the undercarriage for conveying the fluid from the annular chamber (20) to the electrically controlled valve (115) at rest, includes both a non-return valve (118) and a restriction (119) to control the speed at which the undercarriage is lowered.

## Patentansprüche

1. System zur Betätigung eines Betätigungszylinders für das Fahrwerk eines Flugzeugs, umfassend eine Hydraulikquelle (100), die in der Lage ist, zum Einfahren des Fahrwerks Druckfluid der ringförmigen Kammer (20) des Bedienungszylinders (V) bzw. zum Ausfahren des Fahrwerks der Hohlkammer (10) vollen Querschnittes des Zylinders zuzuleiten, dadurch **gekennzeichnet**, daß es eine Sicherheitsvorrichtung (150) zur Verhinderung einer Überlastung der Kolbenstange (T) des Bedienungszylinders (V) durch Druckspitzen umfaßt, die zwei Überdruckventile (130, 140) aufweist, wobei ein erstes Überdruckventil (130) den der ringförmigen Kammer (20) zugeführten Druck begrenzt und ferner von dem in der Hohlkammer (10) herrschenden Druck vorgesteuert wird, um den in der ringförmigen Kammer herrschenden Druck abfallen zu lassen, und ein zweites Überdruckventil (140) vom Differentialtyp kontinuierlich den zwischen den beiden Kammern (10, 20) des Zylinders (V) bestehenden Druckunterschied regelt.

2. Betätigungssystem nach Anspruch 1, dadurch **gekennzeichnet**, daß die beiden Überdruckventile (130, 140) in eine Schaltung (120) integriert sind, die eine erste, der Hohlkammer (10) zugeordnete Endstellungs-Dämpfungseinrichtung (15) umfaßt, um beim Abschluß des Einfahrens des Fahrwerks gleichzeitig das Abbremsen der Kolbenstange (T) und den Druckabfall in dem Endbereich (11) der der Dämpfungseinrichtung zugeordneten Kammer zu steuern.

3. Betätigungssystem nach Anspruch 2, dadurch **gekennzeichnet**, daß die erste Dämpfungseinrichtung (15) eine Drossel (17) und ein Rückschlagventil (16) aufweist und dazu dient, die Endgeschwindigkeit der Kolbenstange (T) nach deren Abbremsen zu steuern.

4. Betätigungssystem nach Anspruch 2, dadurch **gekennzeichnet**, daß die Schaltung (120) ferner eine zweite, der ringförmigen Kammer (20) zugeordnete Endstellungs-Dämpfungseinrichtung (25) umfaßt, um beim Abschluß des Ausfahrens des Fahrwerks gleichzeitig das Abbremsen der Kolbenstange (T) und den Druckabfall in dem Endbereich (21) der der Dämpfungseinrichtung zugeordneten Kammer zu steuern.

5. Betätigungssystem nach Anspruch 4, dadurch **gekennzeichnet**, daß die zweite Dämpfungseinrichtung (25) eine Drossel (27) und ein Rückschlagventil (26) aufweist und dazu dient, die Endgeschwindigkeit der Kolbenstange (T) nach deren Abbremsen zu steuern.

6. Betätigungssystem nach Anspruch 4 oder 5, dadurch **gekennzeichnet**, daß der zweiten Dämpfungseinrichtung (25) ferner ein drittes Überdruckventil (135) zugeordnet ist, um den in dem Endbereich (21) der ringförmigen Kammer (20) herrschenden Druck zu begrenzen.

7. Betätigungssystem nach einem der Ansprüche 1 bis 6, dadurch **gekennzeichnet**, daß es ferner ein elektrisches Ventil (115) aufweist, das mit der Hydraulikquelle (100) derart verbunden ist, daß es einerseits ein Starten der Hydraulikquelle unter geringer Last, wobei das elektrische Ventil dabei zum Zuführen von Druckfluid zu einer der beiden Kammern (10, 20) des Zylinders aktiviert wird, und andererseits im Notfall ein Ausfahren des Fahrwerks bei Versagen der Hydraulikquelle (100) ermöglicht, wobei das elektrische Ventil dabei nicht aktiviert ist.

8. Betätigungssystem nach Anspruch 7, dadurch **gekennzeichnet**, daß die für das Ausfahren im Notfall vorgesehene Leitung (113) zur Leitung des Fluids aus der ringförmigen Kammer (20) zum inaktivierten elektrischen Ventil (115) ein Rückschlagventil (118) sowie eine Drossel (119) aufweist, um die Ausfahrgeschwindigkeit des Fahrwerks zu steuern.
